# FASCICULE DE BREVET EUROPEEN

(11) **EP 0 954 956 B1**
(45) Date de publication et mention de la délivrance du brevet: **26.03.2003**
(21) Numéro de dépôt: 99440100.8
(22) Date de dépôt: 04.05.1999
(51) Int. Cl.: A01D 78/10

(54) **Machine de fenaison**
Heuwerbungsmaschine
Haymaking machine

(30) Priorité: 06.05.1998 FR 9805924
(43) Date de publication de la demande: 10.11.1999
(73) Titulaire: KUHN S.A., 67706 Saverne Cedex (FR)
(72) Inventeur: Hummel, Ludwig, 92256 Hahnbach (DE)
(74) Mandataire: Andres, Jean-Claude

(56) Documents cités:
- EP-A- 0 642 733
- EP-A- 0 772 969
- DE-U- 8 715 678
- DE-U- 9 419 786
- FR-A- 2 663 189

## Description

La présente invention concerne une machine de fenaison, notamment une andaineuse de végétaux couchés sur le sol, comportant une structure portant au moins une roue râteleuse qui est articulée à l'extrémité d'un bras porteur de manière à pouvoir pivoter autour d'un premier axe sensiblement perpendiculaire au sens d'avancement, laquelle roue râteleuse est munie de bras avec des outils de travail et peut être entraînée en rotation autour d'un axe support sensiblement vertical qui est muni à son extrémité inférieure d'au moins une première roue d'appui qui se situe à l'arrière d'une zone dans laquelle les outils de travail ramassent les végétaux au sol, la roue râteleuse comportant au moins une deuxième roue d'appui qui se situe à l'avant de ladite zone dans laquelle les outils de travail ramassent les végétaux au sol.

Sur une machine de ce genre, telle que décrite dans le document EP 0 642 733 A, les roues d'appui ont pour fonction de faire suivre les dénivellations du sol à la roue râteleuse. Toutefois, comme la roue qui est placée à l'avant de la zone de ramassage déplace les outils de travail dès qu'elle-même passe sur un obstacle, ces outils peuvent être soulevés ou abaissés d'une manière trop importante avant qu'ils n'aient à passer eux-mêmes cet obstacle. Ils peuvent alors soit laisser des végétaux au sol, soit gratter le sol et mélanger de la terre aux végétaux. Les déplacements provoqués par la roue d'appui située à l'arrière des outils de travail peuvent avoir les mêmes conséquences préjudiciables à la qualité du travail fourni par la machine.

La présente invention a pour but de remédier aux inconvénients précités. Elle doit notamment améliorer le suivi du relief du sol par les outils de travail.

A cet effet, une importante caractéristique de l'invention consiste en ce que la première roue d'appui et la deuxième roue d'appui sont montées chacune sur un levier qui est articulé sur un support solidaire de la roue râteleuse, qu'entre chaque levier et le support correspondant est disposé un vérin hydraulique et que ces vérins hydrauliques sont reliés entre eux au moyen d'un tuyau faisant communiquer leurs chambres.

Lorsque les roues d'appui rencontrent des dénivellations durant le travail, elles font pivoter la roue râteleuse autour de son axe d'articulation sensiblement perpendiculaire au sens d'avancement. Elles-mêmes se déplacent sensiblement de la même manière que si elles étaient montées sur un balancier dont le pivot se situerait au milieu des outils de travail. Elles guident ainsi les outils de travail de sorte qu'ils restent constamment plus proche de la surface du sol et râtellent la totalité du fourrage se trouvant sur ledit sol.

D'autres caractéristiques et avantages de l'invention ressortiront des revendications et de la description ci-après d'un exemple de réalisation non limitatif de l'invention, avec référence aux dessins annexés dans lesquels :
- la figure 1 représente une vue de dessus d'une machine selon l'invention.
- la figure 2 représente, à plus grande échelle, une vue de côté d'une roue râteleuse,
- la figure 3 représente, à plus grande échelle, une vue de derrière d'une roue râteleuse.

Telle qu'elle est représentée sur les figures annexées, la machine selon l'invention comporte une structure porteuse (1). Celle-ci est notamment constituée par une poutre centrale (2) qui est sensiblement horizontale. Cette poutre (2) possède à son extrémité avant un dispositif d'accouplement (3) pour l'accrocher à un tracteur d'entraînement permettant de la déplacer dans une direction d'avancement (A). A son extrémité arrière, elle possède deux supports (4 et 5) divergents, ayant chacun une roue porteuse (6, 7) qui repose sur le sol. Sur chaque côté de la poutre (2) est articulé au moyen d'un axe (8, 9) sensiblement horizontal un bras (10, 11) portant chacun une roue râteleuse (12, 13). Chacun de ces bras (10 et 11) pourrait aussi être muni de deux roues râteleuses. Dans ce cas, la machine en comporterait quatre au total et aurait une largeur de travail plus importante. Elle pourrait aussi comporter un seul bras avec une roue râteleuse ou bien de chaque côté de la poutre centrale (2) deux bras avec des longueurs différentes et portant chacun une roue râteleuse.

Les deux roues râteleuses (12 et 13) sont sensiblement identiques. Chacune comporte un carter (14) dans lequel est fixé un axe support (15) sensiblement vertical. Sous celui-ci est disposé un boîtier (16) avec des bras (17) équipés d'outils de travail (18) tels que des fourches. Ce boîtier (16) est monté sur l'axe support (15) de manière à pouvoir tourner autour. Les bras porte-outils (17) sont guidés dans des paliers solidaires du boîtier (16) de sorte qu'ils puissent pivoter autour de leurs axes géométriques longitudinaux respectifs. A l'intérieur de ce boîtier est prévue une came de commande fixée sur l'axe support (15). Chaque bras porte-outils (17) comporte à son extrémité située dans le boîtier (16) un levier avec un galet qui est guidé dans ladite came. Des roues râteleuses avec des outils de travail non commandés pourraient également équiper la machine selon l'invention.

Dans le carter (14) de chaque roue râteleuse (12, 13) sont prévus des moyens pour entraîner le boîtier (16) en rotation autour de l'axe support (15). Ces moyens sont constitués par une couronne dentée qui est solidaire de la partie supérieure du boîtier (16) et un pignon d'entraînement qui engrène avec ladite couronne. Ce pignon est lié à un arbre (19) qui s'étend hors du carter (14) en direction de la poutre (2). Sur cet arbre (19) est branché un arbre de transmission (20) avec un joint de cardan près de chacune de ses extrémités. Cet arbre de transmission (20) est relié à un carter de distribution (21) qui est fixé sous la poutre (2) et qui est relié par d'autres arbres de transmission à l'arbre de prise de force du tracteur. L'entraînement en rotation du boîtier (16) de chaque roue râteleuse pourrait également être effectué avec des moyens hydrauliques.

Le bras porteur (10, 11) de chaque roue râteleuse (12, 13) est équipé d'un vérin hydraulique (22, 23) qui permet de le relever dans une position sensiblement verticale autour de son axe d'articulation (8, 9). Chaque vérin hydraulique (22, 23) est articulé avec une de ses extrémités sur la poutre (2) et avec son autre extrémité sur le bras (10, 11) correspondant.

Le carter (14) de chaque roue râteleuse (12, 13) est articulé sur le bras porteur (10, 11) correspondant au moyen d'un premier axe (24) qui est sensiblement perpendiculaire au sens d'avancement (A) et qui est solidaire d'un pivot (25). Cet axe (24) est engagé dans un logement prévu à l'extrémité dudit bras (10, 11) de manière à pouvoir tourner dans celui-ci. Ledit carter (14) est en sus articulé sur le pivot (25) au moyen d'un second axe (26) qui est dirigé sensiblement dans la direction d'avancement (A). Ce second axe (26) est engagé dans un orifice prévu dans le pivot (25), de manière à pouvoir tourner dans celui-ci. Les angles de pivotement autour de ces deux axes (24 et 26) peuvent être limités au moyen de butées non représentées.

L'axe support (15) de chaque roue râteleuse (12, 13) est muni à son extrémité inférieure d'une première roue (27) d'appui au sol. Cette roue se situe à l'arrière d'une zone dans laquelle les outils de travail (18) ramassent les végétaux au sol. Elle est montée sur un levier (28) qui est articulé au moyen d'un axe (29) sensiblement perpendiculaire au sens d'avancement (A), sur un support (30) qui est fixé sur l'extrémité inférieure de l'axe support (15). Entre ce levier (28) et le support (30) est disposé un vérin hydraulique (31) à simple effet.

Une deuxième roue d'appui (32) se situe à l'avant de ladite zone dans laquelle les outils de travail (18) ramassent les végétaux au sol. Cette roue (32) est montée sur un levier (33) qui est articulé sur un support (34) au moyen d'un axe (35) sensiblement perpendiculaire au sens d'avancement (A). Ce support (34) s'étend par-dessus la roue râteleuse (12, 13) correspondante et est lié au carter (14) de celle-ci. Il est avantageusement en forme de protecteur et empêche l'accès par l'avant dans la trajectoire des bras porte-outils (17). Un vérin hydraulique (36) à simple effet, est disposé entre le levier (33) et ledit support (34). Les deux vérins hydrauliques (31 et 36) peuvent être sensiblement identiques.

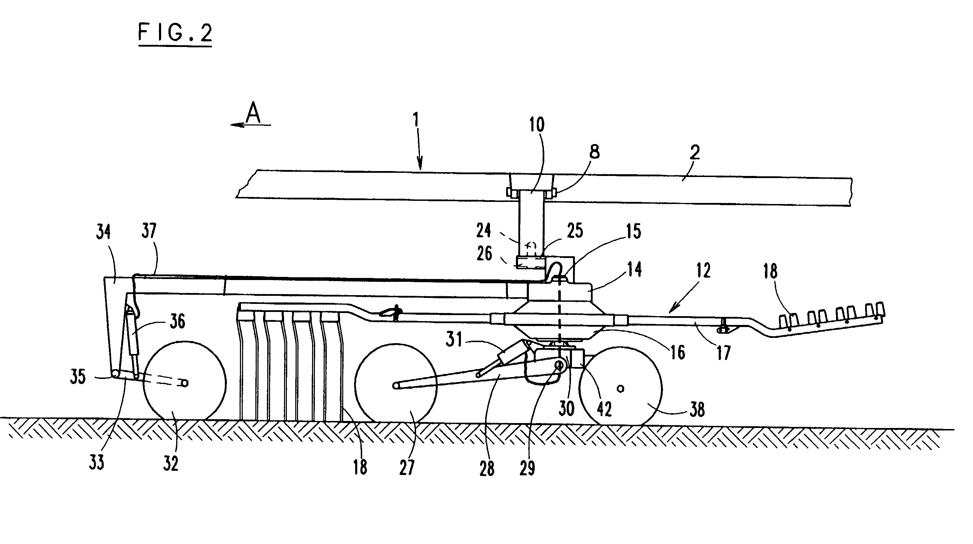

Sur chaque roue râteleuse (12, 13), le vérin hydraulique (31) qui est lié au levier (28) de la première roue d'appui (27) est relié au vérin hydraulique (36) qui est lié au levier (33) de la deuxième roue d'appui (32) au moyen d'un tuyau (37) faisant communiquer leurs chambres entre elles. Ledit tuyau (37) passe par l'axe support central (15) de la roue râteleuse (12, 13) (voir figure 2).

La première roue d'appui (27) et la deuxième roue d'appui (32) de chaque roue râteleuse (12, 13) se situent à proximité et sensiblement à la même distance des outils de travail (18) qui passent entre elles. Ces deux roues d'appui (27 et 32) sont sensiblement alignées. Elles peuvent être fixes comme dans l'exemple représenté. Elles peuvent également être pivotantes autour d'axes d'articulation sensiblement verticaux de manière à pouvoir s'orienter plus facilement dans les virages.

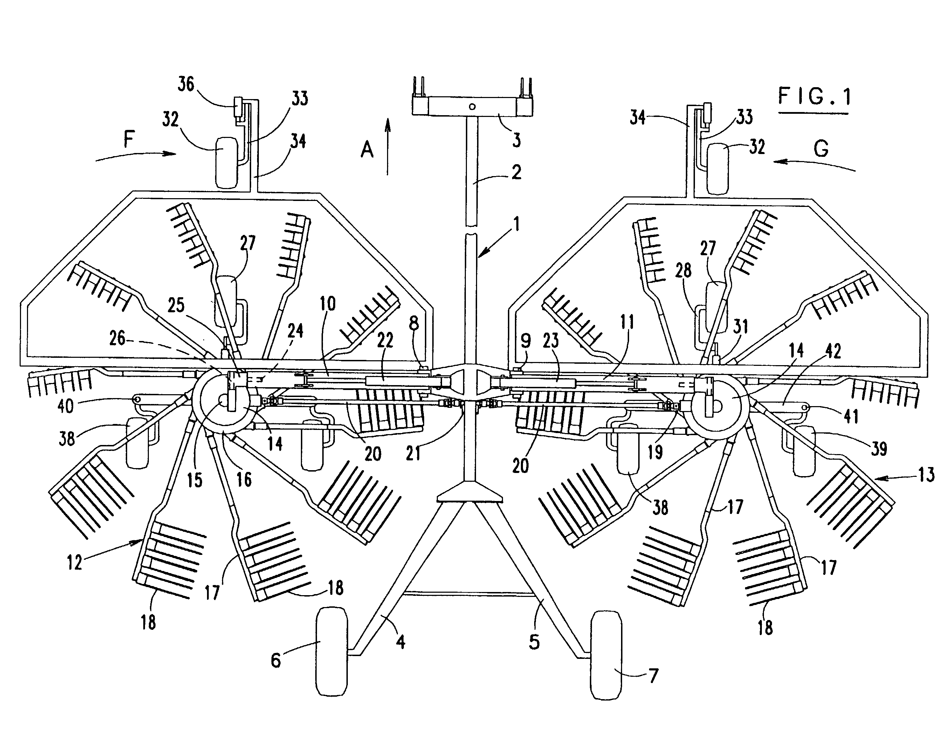

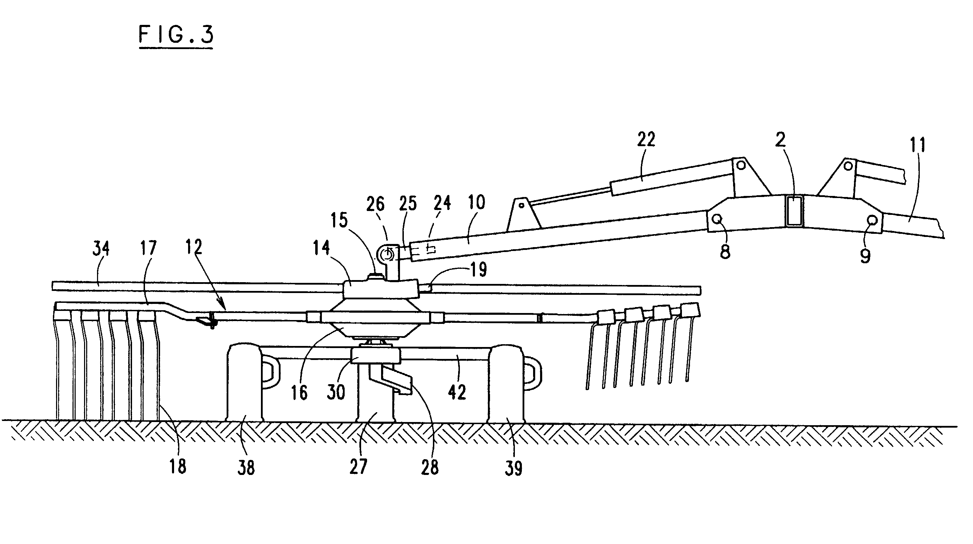

Ainsi que cela ressort notamment des figures 1 et 3, l'extrémité inférieure de l'axe support (15) de chaque roue râteleuse (12 et 13) est munie de roues d'appui supplémentaires (38 et 39). Celles-ci se trouvent en arrière par rapport à l'axe support (15) correspondant. Elles sont articulées au moyen d'axes sensiblement verticaux (40 et 41) sur une traverse (42) qui est fixée sur le support (30). Elles peuvent pivoter autour de ces axes (40 et 41) en vue d'obtenir une meilleure orientation dans la direction d'avancement de la machine.

Selon une variante de réalisation qui n'est pas représentée, l'extrémité inférieure de l'axe support (15) de chaque roue râteleuse (12 et 13) est munie de deux paires de roues d'appui supplémentaires. Chacune de ces paires est montée sur un balancier qui est articulé à l'une des extrémités de la traverse (42) qui est fixée sur le support (30) solidaire de l'axe central (15).

Durant le travail, la machine selon l'invention est attelée à un tracteur qui la déplace dans le sens de la flèche (A). Les deux bras porteurs (10 et 11) sont alors abaissés de sorte que les roues (27, 32, 38 et 39) des deux roues râteleuses (12 et 13) reposent sur le sol. Les boîtiers (16) de ces roues râteleuses (12 et 13) sont entraînés en rotation dans le sens des flèches (F et G), à partir de l'arbre de prise de force du tracteur. Durant cette rotation, les bras porte-outils (17) de chaque roue râteleuse (12, 13) sont commandés par la came qui est logée dans le boîtier (16) correspondant de telle sorte que leurs outils (18) soient près du sol et râtellent les végétaux sur la partie avant de leur trajectoire. Ensuite, ils s'éloignent du sol et déposent ces végétaux sous la forme d'un andain sur la bande de terrain qui se situe entre les deux roues râteleuses (12 et 13).

Lorsque la machine travaille sur un terrain avec des dénivellations et que la deuxième roue d'appui (32) d'une des roues râteleuses (12, 13) rencontre un obstacle tel qu'une bosse, elle se déplace vers le haut. Elle fait alors tourner la partie avant de la roue râteleuse (12, 13) correspondante vers le haut autour de son axe d'articulation (24) sensiblement perpendiculaire au sens d'avancement (A) et fait pivoter le levier (33) sur lequel elle est montée vers le haut autour de son axe d'articulation (35). Ledit levier (33) comprime ainsi le vérin hydraulique (36) de sorte qu'une certaine quantité d'huile soit poussée hors de sa chambre. Cette huile est dirigée vers le vérin hydraulique (31) qui est articulé sur le levier (28) de la première roue d'appui (27), en passant par le tuyau (37). Ce dernier vérin hydraulique (31) est alors actionné de sorte qu'il s'allonge. De ce fait, la première roue d'appui (27) est poussée vers le sol et favorise ledit pivotement de la roue râteleuse (12 ou 13) autour de l'axe d'articulation (24).

Ledit pivotement de la roue râteleuse (12 ou 13) est cependant inférieur à ce qu'il serait s'il n'y avait pas un déplacement d'huile du vérin (36) de la seconde roue d'appui (32) vers celui de la première roue d'appui (27). Les outils de travail (18) restent ainsi plus près de la surface du sol et ramassent la totalité du fourrage qui s'y trouve. Dès que la deuxième roue d'appui (32) est passée par-dessus l'obstacle, elle se déplace vers le bas. Une certaine quantité d'huile repasse dans le vérin hydraulique (36) qui est lié à son levier (33). La première roue d'appui (27) se déplace alors vers le haut autour de l'axe d'articulation (29) de son levier (28), ce qui fait tourner l'avant de la roue râteleuse (12 ou 13) vers le bas, autour de l'axe d'articulation (24) sensiblement perpendiculaire au sens d'avancement (A). Les outils de travail (18) franchissent ainsi l'obstacle en restant près de la surface du sol. Enfin, les deux roues d'appui (27 et 32) maintiennent la roue râteleuse (12 ou 13) sensiblement horizontale dès qu'elles reviennent sur une surface plane.

Lorsque les roues d'appui (32 et 27) passent dans un creux, elles guident également les outils de travail (18) de sorte qu'ils restent constamment près de la surface du sol dans la partie avant de leur trajectoire. Dans un premier temps, la seconde roue d'appui (32) se déplace vers le bas autour de l'axe d'articulation (35) de son levier (33). Simultanément le vérin hydraulique (36) qui est lié à ce levier (33) s'allonge tandis que le vérin hydraulique (31) qui est lié au levier (28) de la première roue d'appui (27) se raccourcit. Cette roue d'appui (27) pivote alors vers le haut avec son levier (28) et permet à la roue râteleuse (12 ou 13) correspondante de pivoter vers le bas à l'avant, autour de son axe d'articulation (24) sensiblement perpendiculaire au sens d'avancement (A). Dès que la seconde roue d'appui (32) rencontre le côté remontant de la dénivellation, elle se déplace à nouveau vers le haut avec son levier (33) et provoque un pivotement de la roue râteleuse (12 ou 13) correspondante comparable à celui décrit précédemment pour le passage sur une bosse.

Le montage des roues d'appui (27 et 32) sur des leviers articulés (28 et 33) et la liaison hydraulique entre les deux vérins (31 et 36) qui sont associés à ces leviers (28 et 33) font en sorte que lesdites roues d'appui (27 et 32) se déplacent au travail sensiblement de la même manière que si elles étaient montées sur un balancier avec un pivot se situant entre elles et pratiquement au milieu des outils de travail (18). Ceci permet de réduire sensiblement de moitié les débattements en hauteur de ces outils (18) et d'obtenir un guidage plus précis par rapport au relief du sol. Le fourrage est alors intégralement ramassé et le risque de souillures avec de la terre arrachée par les outils de travail (18) est réduit. Enfin, la vitesse d'avancement peut être augmentée.

L'axe d'articulation (26) qui est dirigée dans la direction d'avancement (A) permet à la roue râteleuse (12 ou 13) correspondante de s'incliner vers la droite ou vers la gauche lorsque les roues d'appui supplémentaires (38 et 39) ou les paires de roues d'appui supplémentaires passent sur des dénivellations.

Pour le transport, les deux bras porteurs (10 et 11) et les roues râteleuses (12 et 13) sont relevés dans une position sensiblement verticale au moyen des vérins hydrauliques (22 et 23). Dans cette position la largeur de la machine est considérablement réduite.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel que défini dans les revendications.

## Revendications

1. Machine de fenaison, notamment une andaineuse de végétaux couchés sur le sol, comportant une structure (1) portant au moins une roue râteleuse (12, 13) qui est articulée à l'extrémité d'un bras porteur (10, 11) de manière à pouvoir pivoter autour d'un premier axe (24) sensiblement perpendiculaire au sens d'avancement (A), laquelle roue râteleuse (12, 13) est munie de bras (17) avec des outils de travail (18) et peut être entraînée en rotation autour d'un axe support (15) sensiblement vertical qui est muni à son extrémité inférieure d'au moins une première roue d'appui (27) qui se situe à l'arrière d'une zone dans laquelle les outils de travail (18) ramassent les végétaux au sol, la roue râteleuse (12, 13) comportant au moins une deuxième roue d'appui (32) qui se situe à l'avant de ladite zone dans laquelle les outils de travail (18) ramassent les végétaux au sol, ***caractérisée par le fait* que** chacune de ces roues d'appui (27 et 32) est montée sur un levier (28 et 33) qui est articulé sur un support (30 et 34) solidaire de la roue râteleuse (12, 13), qu'entre chaque levier (28 et 33) et le support (30 et 34) correspondant est disposé un vérin hydraulique (31 et 36) et que ces deux vérins hydrauliques (31 et 36) sont reliés entre eux au moyen d'un tuyau (37) faisant communiquer leurs chambres.

2. Machine selon la revendication 1, ***caractérisée par le fait* que** la première roue d'appui (27) et la deuxième roue d'appui (32) se situent à proximité et sensiblement à la même distance des outils de travail (18) se situant dans la partie la plus en avant de leur zone de travail.

3. Machine selon la revendication 1 ou 2, ***caractérisée par le fait* que** la première roue d'appui (27) et la deuxième roue d'appui (32) sont sensiblement alignées.

4. Machine selon l'une quelconque des revendications précédentes, ***caractérisée par le fait* que** la première roue d'appui (27) et la deuxième roue d'appui (32) sont pivotantes.

5. Machine selon la revendication 1, ***caractérisée par le fait* que** les axes d'articulation (29 et 35) des deux leviers (28 et 33) sur leurs supports (30 et 34) sont sensiblement perpendiculaires au sens d'avancement (A).

6. Machine selon la revendication 1, ***caractérisée par le fait* que** les vérins hydrauliques (31 et 36) sont à simple effet.

7. Machine selon l'une quelconque des revendications précédentes, ***caractérisée par le fait* que** chaque roue râteleuse (12, 13) est articulée par rapport au bras porteur (10, 11) correspondant au moyen d'un second axe (26) sensiblement dirigé dans la direction d'avancement (A).

8. Machine selon l'une quelconque des revendications précédentes, ***caractérisée par le fait* que** l'extrémité inférieure de l'axe support (15) de chaque roue râteleuse (12 et 13) est munie de deux roues d'appui supplémentaires (38 et 39) qui peuvent pivoter autour d'axes sensiblement verticaux (40 et 41).

9. Machine selon l'une quelconque des revendications 1 à 7, ***caractérisée par le fait* que** l'extrémité inférieure de l'axe support (15) de chaque roue râteleuse (12 et 13) est munie de deux paires de roues d'appui supplémentaires, chacune de ces paires étant montée sur un balancier.

## Claims

1. Haymaking machine, particularly a windrower of plant matter lying on the ground, comprising a structure (1) carrying at least one rake wheel (12, 13) which is articulated to the end of a carrying arm (10, 11) so as to be able to pivot about a first axis (24) substantially perpendicular to the direction of forward travel (A), which rake wheel (12, 13) is equipped with arms (17) with working tools (18) and can be driven in rotation about a substantially vertical support axis (15) which is equipped at its lower end with at least one support wheel (27) which lies behind a region in which the working tools (18) gather the plant matter on the ground, the rake wheel (12, 13) comprising at least one second support wheel (32) which is situated in front of the said region in which the working tools (18) gather the plant matter on the ground, ***characterized in* that** each of these support wheels (27 and 32) is mounted on a lever (28 and 33) which is articulated to a support (30 and 34) secured to the rake wheel (12, 13), **in that** a hydraulic ram (31 and 36) is arranged between each lever (28 and 33) and the corresponding support (30 and 34), and **in that** these two hydraulic rams (31 and 36) are connected together by means of a hose (37) causing their chambers to communicate.

2. Machine according to Claim 1, ***characterized in* that** the first support wheel (27) and the second support wheel (32) are situated near to and substantially the same distance away from the working tools (18) located in the furthest forward part of their working region.

3. Machine according to Claim 1 or 2, ***characterized in* that** the first support wheel (27) and the second support wheel (32) are substantially aligned.

4. Machine according to any one of the preceding claims, ***characterized in* that** the first support wheel (27) and the second support wheel (32) can pivot.

5. Machine according to Claim 1, ***characterized in* that** the axes (29 and 35) of articulation of the two levers (28 and 33) to their supports (30 and 34) are substantially perpendicular to the direction of forward travel (A).

6. Machine according to Claim 1, ***characterized in* that** the hydraulic rams (31 and 36) are single-acting rams.

7. Machine according to any one of the preceding claims, ***characterized in* that** each rake wheel (12, 13) is articulated with respect to the corresponding carrying arm (10, 11) by means of a second axis (26) directed substantially in the direction of forward travel (A).

8. Machine according to any one of the preceding claims, ***characterized in* that** the lower end of the support axis (15) of each rake wheel (12 and 13) is fitted with two additional support wheels (38 and 39) which can pivot about substantially vertical axes (40 and 41).

9. Machine according to any one of Claims 1 to 7, ***characterized in* that** the lower end of the support axis (15) of each rake wheel (12 and 13) is equipped with two pairs of additional support wheels, each of these pairs being mounted on a balance beam.

## Patentansprüche

1. Heuwerbungsmaschine, insbesondere Schwader für auf dem Boden liegendes Pflanzengut, mit einem Gestell (1), das mindestens ein Rechrad (12, 13) trägt, welches am Ende eines Tragarms (10, 11) so angelenkt ist, dass es um eine im Wesentlichen senkrecht zur Fahrtrichtung (A) verlaufende erste Achse (24) schwenken kann, wobei das Rechrad (12, 13) mit Armen (17) mit Arbeitswerkzeugen (18) versehen ist und um eine im Wesentlichen vertikale Stützachse (15) drehangetrieben werden kann, die an ihrem unteren Ende mit mindestens einem ersten Stützrad (27) versehen ist, das sich hinter einem Bereich befindet, in dem die Arbeitswerkzeuge (18) das Pflanzengut auf dem Boden aufsammeln, wobei das Rechrad (12, 13) mindestens ein zweites Stützrad (32) umfasst, das sich vor dem Bereich befindet, in dem die Arbeitswerkzeuge (18) das Pflanzengut auf dem Boden aufsammeln, ***dadurch gekennzeichnet,* dass** jedes dieser Stützräder (27 und 32) an einem Hebel (28 und 33) angebracht ist, der an einer fest mit dem Rechrad (12, 13) verbundenen Stütze (30 und 34) angelenkt ist, dass zwischen jedem Hebel (28 und 33) und der entsprechenden Stütze (30 und 34) ein Hydraulikzylinder (31 und 36) angeordnet ist und dass diese beiden Hydraulikzylinder (31 und 36) mittels eines Schlauchs (37) miteinander verbunden sind, der ihre Kammern miteinander verbindet.

2. Maschine nach Anspruch 1, ***dadurch gekennzeichnet,* dass** sich das erste Stützrad (27) und das zweite Stützrad (32) in der Nähe der und im Wesentlichen im gleichen Abstand zu den Arbeitswerkzeuge(n) (18) befinden, die sich im vordersten Teil ihres Arbeitsbereichs befinden.

3. Maschine nach Anspruch 1 oder 2, ***dadurch gekennzeichnet,* dass** das erste Stützrad (27) und das zweite Stützrad (32) im Wesentlichen aufeinander ausgerichtet sind.

4. Maschine nach irgend einem der vorhergehenden Ansprüche, ***dadurch gekennzeichnet,* dass** das erste Stützrad (27) und das zweite Stützrad (32) schwenkbar sind.

5. Maschine nach Anspruch 1, ***dadurch gekennzeichnet*, dass** die Gelenkachsen (29 und 35) der beiden Hebel (28 und 33) an ihren Stützen (30 und 34) im Wesentlichen senkrecht zur Fahrtrichtung (A) sind.

6. Maschine nach Anspruch 1, ***dadurch gekennzeichnet,* dass** die Hydraulikzylinder (31 und 36) einfachwirkende Zylinder sind.

7. Maschine nach irgend einem der vorhergehenden Ansprüche, ***dadurch gekennzeichnet,* dass** jedes Rechrad (12, 13) mittels einer im Wesentlichen in Fahrtrichtung (A) ausgerichteten zweiten Achse (26) bezüglich des entsprechenden Tragarms (10, 11) angelenkt ist.

8. Maschine nach irgend einem der vorhergehenden Ansprüche, ***dadurch gekennzeichnet,* dass** das untere Ende der Stützachse (15) jedes Rechrads (12 und 13) mit zwei zusätzlichen Stützrädern (38 und 39) versehen ist, die um im Wesentlichen vertikale Achsen (40 und 41) schwenken können.

9. Maschine nach irgend einem der Ansprüche 1 bis 7, ***dadurch gekennzeichnet*, dass** das untere Ende der Stützachse (15) jedes Rechrads (12 und 13) mit zwei zusätzlichen Stützräderpaaren versehen ist, die jeweils an einer Schwinge angebracht sind.
